# EUROPEAN PATENT SPECIFICATION

(11) **EP 3 909 797 B1**
(45) Date of publication and mention of the grant of the patent: **04.10.2023**
(21) Application number: 21173812.5
(22) Date of filing: 14.05.2021
(51) Int. Cl.: B60J 7/06

(54) **A SUPPORT STRUCTURE FOR A TARPAULIN FOR VEHICLES, TRAILERS, SEMI-TRAILERS AND CONTAINERS**
STÜTZSTRUKTUR FÜR EINE PLANE FÜR FAHRZEUGE, ANHÄNGER, SATTELAUFLIEGER UND CONTAINER
STRUCTURE DE SUPPORT POUR BÂCHE DE VÉHICULES, REMORQUES, SEMI-REMORQUES ET CONTENEURS

(30) Priority: 14.05.2020 IT 202000002422 U
(43) Date of publication of application: 17.11.2021
(73) Proprietor: Cramaro Holding S.p.A., 37044 Cologna Veneta (Verona) (IT)
(72) Inventor: BINCO, Davide, 37060 Sorga' (Verona) (IT); PICCOLI, Enrico, 37050 Belfiore (Verona) (IT)

(56) References cited:
- EP-A1- 3 118 038
- JP-A- S5 095 917
- US-A- 5 524 953

## Description

The present invention concerns a support structure for a covering tarpaulin for vehicles, trailers, semi-trailers and containers, comprising
two series of sliders configured to be arranged for sliding along respective side supports of a loading compartment,
a plurality of carrier ribs configured to support the covering tarpaulin, each carrier rib connecting two sliders of the two series to each other, respectively,
a tilting arm configured to support an end flap of the covering tarpaulin and hinged to an end rib of said plurality of carrier ribs, or to at least one of the sliders of the end rib, said tilting arm being rotatable between a raised position and a lowered position,
a control lever integral in rotation with the tilting arm and configured to engage an abutment element arranged on the loading compartment so as to lower the tilting arm when the support structure reaches an extended position on the loading compartment.

Such a covering assembly is described for example in JP S53 87524 U. The known covering assemblies provide a drive system for moving the support structure between a retracted opening position and an extended closed position, generally by traction means such as cables or straps. A drawback noted in the known assemblies is linked to the fact that the mechanism for lowering the tilting arm, based on the engagement between the control lever and the abutment element, may cause a lifting, and therefore a detachment, of the end rib of the support structure from the side supports of the loading compartment.

As further prior art EP 3 118 038 A1 can be mentioned.

An object of the present invention is to provide a solution which allows the drawback discussed above to be resolved.

In view of this object, the invention relates to a support structure of the type defined above, wherein the control lever is provided with a hooking portion configured to hook a striker arranged on the loading compartment when the support structure is in the extended position and the swing arm is in the lowered position.

The aforesaid striker is arranged at a lower level with respect to the abutment element and is arranged upstream of the abutment element with respect to the direction of advancement of the support structure toward the extended position.

In the support structure according to the invention, at the end of its rotation induced by the collision between the control lever and the abutment element, the control lever encounters the striker in such a position as to allow it to lock in the closing position and to keep the end rib from rising with regard to the upper edge of the loading compartment.

Further features and advantages of the support structure according to the invention will become clearer from the following detailed description of an embodiment of the invention, made in reference to the appended drawings, provided purely for illustrative and nonlimiting purposes, wherein:
- Fig. 1 and 2 are perspective views of a tilting arm of a support structure according to the invention, respectively in the raised position and in the lowered position; and
- Fig. 3 to 8 are side elevation views of the tilting arm, in various stages of movement from the raised position to the lowered position.

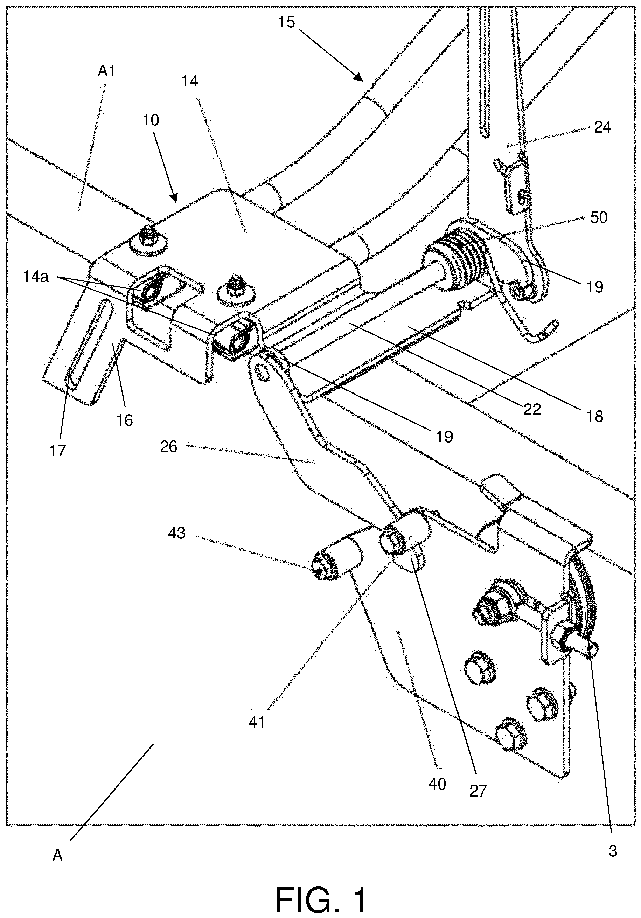

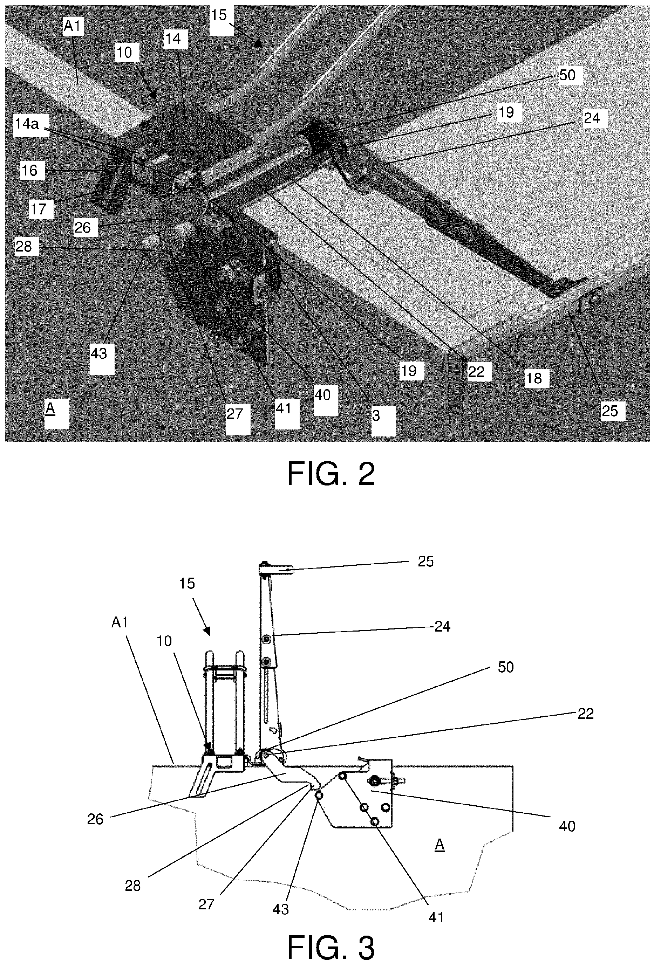

With reference to Fig. 1 and 2, the end part of a support structure for a covering tarpaulin (not shown), installed on a loading compartment of a vehicle, trailer, or container, indicated collectively with A, is shown.

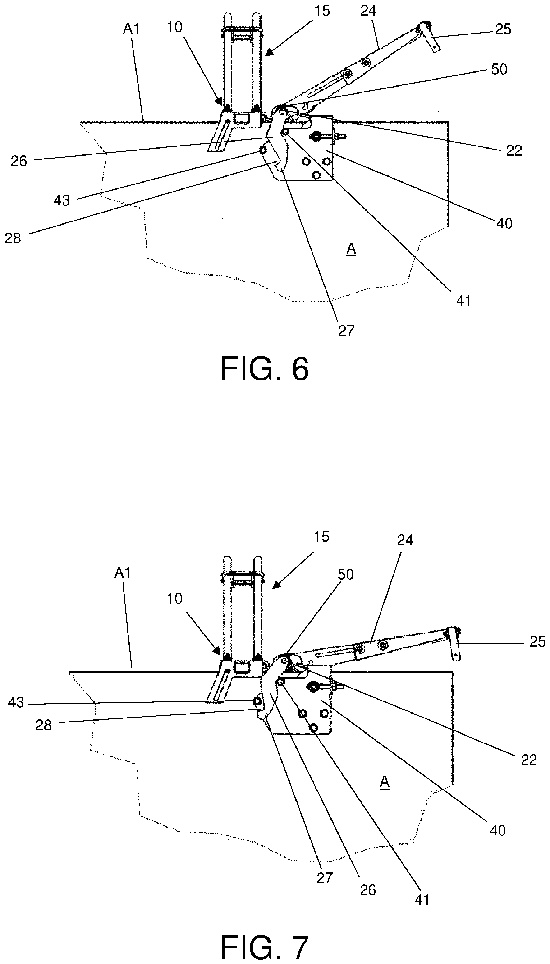

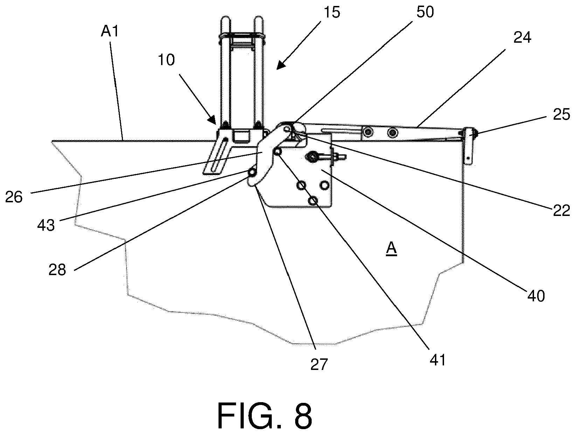

The aforesaid support structure allows the covering tarpaulin to be closed (support structure extended over the loading compartment, which is therefore covered by the tarpaulin) or open (folded structure, and therefore a tarpaulin compacted at one end of the loading compartment). In the following description, reference will be made to the direction of movement of the support structure, using the expressions "forward" or "front" to indicate a direction facing from the folded open position toward the extended closed position of the support structure. For example, in Fig. 3 to 8, the forward direction goes from left to right.

To move the support structure, a drive system is provided which is configured to move the support structure between the folded open position and the extended closed position. The drive system may comprise a cable; in the illustrated example, a pulley 3 is illustrated for this purpose, designed to return the drive cable (not shown). This cable may be selectively wound or unwound from a reel (not shown), which may be controlled by a motor or by a manually driven handle. However, the drive system may be of a different type.

The support structure 2 comprises two sets of sliders, which are connected to the cable of the drive system and are slidably arranged along respective supports or side guides A1 of the loading compartment A. These sliders, only one of which is shown in the figures and indicated with 10, may conventionally have a bottom surface made of an anti-friction material, or provided with rollers. Adjacent sliders 10 of each series may also be connected to each other in a manner known per se, for example by means of articulated arms.

The support structure further comprises a plurality of carrier ribs configured to support a covering tarpaulin (not shown). Each carrier rib, only one of which is represented in the figure and indicated with 15, connects two sliders 10 of the two series of sliders to each other, respectively. In particular, the carrier rib 15 shown in the figures is the last rib of the array of carrier ribs which form the support structure for the covering tarpaulin and will therefore be referred to hereinafter as the end rib. The figures therefore show one of the sliders 10 of the end rib. It is understood that the other slider of the end rib has a configuration that is specularly identical to that described hereinafter.

The slider 10 comprises a main plate 14 from which extends an outer side portion 16 provided with a slot 17 for fastening the covering tarpaulin. Fastening members 14a are provided on a lower side of the main plate 14 to anchor the slider 10 to the cable of the drive system.

On a front side, the main plate 14 comprises a fork-folded support portion 18. The support portion 18 comprises a pair of wings 19. A shaft 22 is rotatably mounted between the wings 19, the shaft therefore defining a rotation axis for a tilting arm 24 and for a control lever 26, fixed to an inner end and an outer end of the shaft 22, respectively.

The free end of the tilting arm 24 is connected by means of a bar 25 to the free end of the tilting arm of the other slider of the end rib 15. Said bar 25 is configured for fastening an end flap of the covering tarpaulin (not shown).

The free end of the control lever 26 is provided with a hooking portion 27 with a recess 28, the function of which will be explained below.

In the vicinity of the closing limit position of the end rib 15, a support plate 40 is mounted on the outer surface of a side wall of the loading compartment A, at the edge of which is arranged the return pulley 3.

On this support plate 40 is positioned an abutment element 41, made for example as a pin. As may be seen in the figures, the abutment element 41 is arranged substantially at the same height as the control lever 26, lower with respect to the axis of rotation of said control lever.

On the support plate 40 there is also positioned a striker 43, made for example as a pin. As may be seen in the figures, the striker 43 is arranged at a lower level than the abutment element 41 and may be arranged upstream of the abutment element 41 with respect to the direction of advancement of the support structure.

A torsional spring (or equivalent elastic means) 50 is mounted coaxially on the shaft 22 to bias the tilting arm 24 toward a raised position, shown in Fig. 1, 3, and 4.

The operation of the configuration described above will now be described, starting from the condition in which the support structure is in the folded open position.

By activating the drive system, the carrier ribs of the support structure are pulled along the lateral supports A1 so as to be spaced apart from each other to bring the support structure into the extended closed position. In particular, toward the end of this movement the end rib 15 is brought in proximity to the abutment element 41 (Fig. 1 and 2). The tilting arm 24 is approximately vertical and remains in this position by virtue of the elastic force applied by the torsional spring 50.

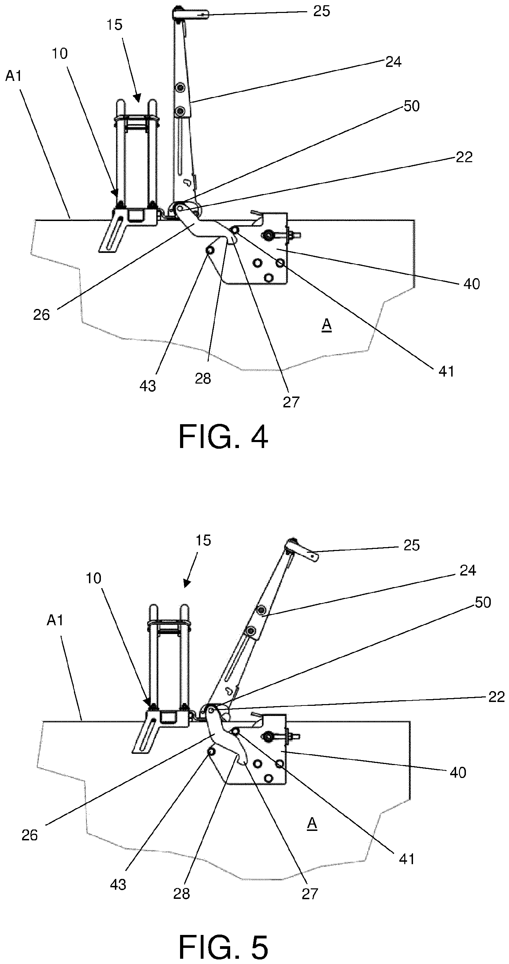

During the subsequent advancement of the end rib 15, the control lever 26 is brought to collide with the abutment element 41 and is thus made to rotate about the rotation axis defined by the shaft 22 (against the action of the spring 50), thus driving the tilting arm 24 in rotation, which progressively lowers (Fig. 5-8) and in turn lowers the flap of the covering tarpaulin fastened thereto on the loading compartment A.

When the rotation is completed, the control lever 26 encounters the striker 43 with the recess 28 obtained in the coupling portion 27, in such a position as to allow it to lock in the closed position and to keep the end rib 15 from rising with regard to the upper edge of the loading compartment A.

The folding of the support structure, and thus the opening of the cover, occurs by activating the drive system in the opposite direction to that described above. The end rib 15 then moves away from the abutment element 41 and the spring 50 causes the tilting arm 14 to rotate from the lowered position toward the raised position, folding the end flap of the covering tarpaulin. At the same time, the control lever 26, integral with the shaft 22 and the tilting arm 24, disengages the striker 43.

## Claims

1. A support structure for a covering tarpaulin for vehicles, trailers, semi-trailers, and containers, comprising
two series of sliders configured to be arranged for sliding along respective side supports (A1) of a loading compartment (A),
a plurality of carrier ribs configured to support the covering tarpaulin, each carrier rib connecting two sliders of the two series to each other, respectively, a tilting arm (24) configured to support an end flap of the covering tarpaulin and hinged to an end rib (15) of said plurality of carrier ribs, or to at least one of the sliders (10) of the end rib, said tilting arm being rotatable between a raised position and a lowered position,
a control lever (26) integral in rotation with the tilting arm (24) and configured to engage an abutment element (41) arranged on the loading compartment (A) so as to lower the tilting arm (24) when the support structure reaches an extended position on the loading compartment (A);
wherein the control lever (26) is provided with a coupling portion (27) configured to engage a striker (43) arranged on the loading compartment (A) when the support structure is in an extended position and the tilting arm (24) is in the lowered position,
**characterized in that** said striker (43) is arranged at a lower level than the abutment element (41) and is arranged upstream of the abutment element (41) with respect to the advancement direction of the support structure towards the extended position.

## Patentansprüche

1. Tragkonstruktion für eine Abdeckplane für Fahrzeuge, Anhänger, Sattelauflieger und Container, umfassend
zwei Reihen von Schiebereglern, die so gestaltet sind, dass sie entlang der jeweiligen Seitenstützen (A1) eines Laderaums (A) gleiten können,
eine Vielzahl von Trägerrippen, die so gestaltet sind, dass sie die Abdeckplane stützen, wobei jede Trägerrippe jeweils zwei Schieberegler der beiden Serien miteinander verbindet,
einen Kipparm (24), der so konfiguriert ist, dass er eine Endklappe der Abdeckplane stützt, und der an einer Endrippe (15) der besagten Vielzahl von Trägerrippen oder an mindestens einem der Schiebereglern (10) der Endrippe angelenkt ist, wobei der besagte Kipparm zwischen einer angehobenen Position und einer abgesenkten Position drehbar ist,
einen Steuerhebel (26), der drehfest mit dem Kipparm (24) verbunden ist und so konfiguriert ist, dass er in ein Anschlagelement (41) eingreift, das an dem Laderaum (A) angeordnet ist, um den Kipparm (24) abzusenken, wenn die Tragkonstruktion eine ausgefahrene Position an dem Laderaum (A) erreicht;
wobei der Steuerhebel (26) mit einem Kupplungsabschnitt (27) versehen ist, der so konfiguriert ist, dass er in einen Anschlag (43) eingreift, der am Laderaum (A) angeordnet ist, wenn sich die Tragkonstruktion in einer ausgefahrenen Position befindet und der Kipparm (24) in der abgesenkten Position ist,
**dadurch gekennzeichnet, dass** der besagte Anschlag (43) auf einem niedrigeren Niveau als das Anschlagelement (41) und stromaufwärts des Anschlagelements (41) in Bezug auf die Vorschubrichtung der Tragkonstruktion in Richtung der ausgefahrenen Position angeordnet ist.

## Revendications

1. Structure de support pour une bâche de couverture pour véhicules, remorques, semi-remorques et conteneurs, comprenant
deux séries de glissières configurées pour être disposées pour glisser le long des supports latéraux respectifs (A1) d'un compartiment de chargement (A),
une pluralité de nervures de support configurées pour supporter la bâche de couverture, chaque nervure de support reliant respectivement deux glissières des deux séries l'une à l'autre,
un bras basculant (24) configuré pour supporter un volet d'extrémité de la bâche de couverture et articulé à une nervure d'extrémité (15) de ladite pluralité de nervures de support, ou à au moins une des glissières (10) de la nervure d'extrémité, ledit bras basculant étant rotatif entre une position relevée et une position abaissée,
un levier de commande (26) solidaire en rotation du bras basculant (24) et configuré pour s'engager dans un élément de butée (41) disposé sur le compartiment de chargement (A) de manière à abaisser le bras basculant (24) lorsque la structure de support atteint une position étendue sur le compartiment de chargement (A) ;
dans lequel le levier de commande (26) est pourvu d'une partie de couplage (27) configurée pour engager une gâche (43) disposée sur le compartiment de chargement (A) lorsque la structure de support est en position étendue et que le bras basculant (24) est en position abaissée, **caractérisée en ce que** ladite gâche (43) est disposée à un niveau inférieur à l'élément de butée (41) et est disposée en amont de l'élément de butée (41) par rapport à la direction d'avancement de la structure de support vers la position étendue.
